# EUROPÄISCHE PATENTSCHRIFT

(11) **EP 0 768 240 B1**
(45) Veröffentlichungstag und Bekanntmachung des Hinweises auf die Patenterteilung: **23.10.2002**
(21) Anmeldenummer: 96114279.1
(22) Anmeldetag: 06.09.1996
(51) Int. Cl.: B64D 45/00, F16L 59/02, H05K 5/02

(54) **Einrichtung zur Aufzeichnung von Flugdaten**
Flight data recording device
Dispositif d'enregistrement de données de vol

(30) Priorität: 11.10.1995 DE 19537810
(43) Veröffentlichungstag der Anmeldung: 16.04.1997
(73) Patentinhaber: DORNIER GmbH, 88039 Friedrichshafen (DE)
(72) Erfinder: Grewe, Reinhold, 88690 Oberuhldingen (DE)
(74) Vertreter: Meel, Thomas

(56) Entgegenhaltungen:
- US-A- 4 694 119
- US-A- 4 944 401
- US-A- 5 123 538

## Beschreibung

Die Erfindung betrifft eine Einrichtung zur Aufzeichnung von Flugdaten mit einem Datenspeicher, der sich innerhalb eines schützenden, metallischen Gehäuses mit Thermoisolation an der Innenfläche befindet.

Eine derartige Einrichtung ist aus der **DE 32 43 495 C2** bekannt, wobei die Informationen auf Magnetband aufgezeichnet werden.

Bordregistriergeräte für Flugdaten sind aus **DE-OS 15 06 020, US-PS 3,327,067** und **Zeitschrift Interavia 10/1966** Seiten 1560 bis 1566 "Bordregistriergeräte für Unfalluntersuchung und Wartung" bekannt. Diese Flugschreiber zur Aufzeichnung von Flugdaten sind in einem mechanisch und thermisch gepanzerten Gehäuse untergebracht, das auf einem Einschubträger innerhalb eines Flugzeugs oder Hubschraubers angeordnet ist. Die Aufzeichnungsgeräte haben ein Gewicht von bis zu 10 kg und sind in entsprechend grossen Behältern untergebracht. Die Montage dieser Behälter im Flugzeug ist mit erheblichem Zeitaufwand und Arbeitsaufwand verbunden, da das Gerät auf einem Einschubträger zu sichern ist. Des weiteren ist von Nachteil, dass aufgrund der Baugrösse eine Unterbringung nur im Innenbereich des Fluggerätes möglich ist, bei einem Unfall kann das Gerät daher durch schwere auf dieses einwirkende Bauteile des Fluggerätes trotz der Panzerung beschädigt werden, so dass Flugdaten zur Auswertung des Unfallherganges nicht mehr zur Verfügung stehen. Auch sind diese Geräte bei Unfällen über Wasser schwer zu bergen.

In der **US 4,944,401** ist eine Einrichtung zur Aufzeichnung von Flugdaten offenbart. Sie umfasst einen Datenspeicher, der sich innerhalb eines schützenden, metallischen Gehäuses mit Thermoisolation an der Innenfläche befindet, sowie Verbindungsleitungen zwischen dem Datenspeicher und Datenquellen. In der Wand des schützenden Gehäuses befindet sich eine Bohrung für die Datenleitungen. Der Datenspeicher ist als eine in einem Vergussblock eingebettete Festkörper-Speicherelektronik (solid state memory recorder) ausgebildet, die den innerhalb des schützenden Gehäuses vorhandenen Hohlraum ausfüllt. Das schützende Gehäuse ist zylindrisch mit Halbkugelschalen an den beiden Enden ausgebildet.

Aufgabe der Erfindung ist es, eine Einrichtung zur Aufzeichnung von Flugdaten in der Weise auszubilden, dass bei kleinen Abmessungen und geringem Gewicht des Geräts eine hohe Sicherheit gewährleistet ist, bei einem Unfall gespeicherte Daten zu erhalten.

Vor allem soll erreicht werden, dass eine Unterbringung in Bereichen des Fluggerätes, die bei Unfällen nur in einem geringen Masse Beschädigungen ausgesetzt sind, ohne Schwierigkeiten möglich ist und dass Flugdaten mit gesteigerter Informationsdichte aufgezeichnet werden können. Eine hohe Datensicherheit soll gewährleistet sein.

Diese Aufgabe wird durch den Gegenstand des Hauptanspruchs gelöst. Die Unteransprüche betreffen vorteilhafte Ausgestaltungen der Erfindung. Das erfindungsgemässe Aufzeichnungsgerät hat in etwa die Grösse und Form eines Tennisballs und unterscheidet sich damit schon äusserlich ganz wesentlich von den bekannten Geräten.

Die Erfindung wird nachfolgend anhand von Fig. näher erläutert.

Es zeigen:
- Fig. 1: die erfindungsgemässe Einrichtung in axonometrischer Darstellung,
- Fig. 2: die Einrichtung von Fig. 1 in Schnittdarstellung,
- Fig. 3: die beispielhafte Anordnung der erfindungsgemässen Einrichtung in einem Flugzeug,
- Fig. 4: die beispielhafte Anordnung der erfindungsgemässen Einrichtung in einem Hubschrauber,
- Fig. 5: ein Blockschaltbild einer Speicherelektronik.

Der erfindungsgemässe crash recorder ist eine kleine Kugel.

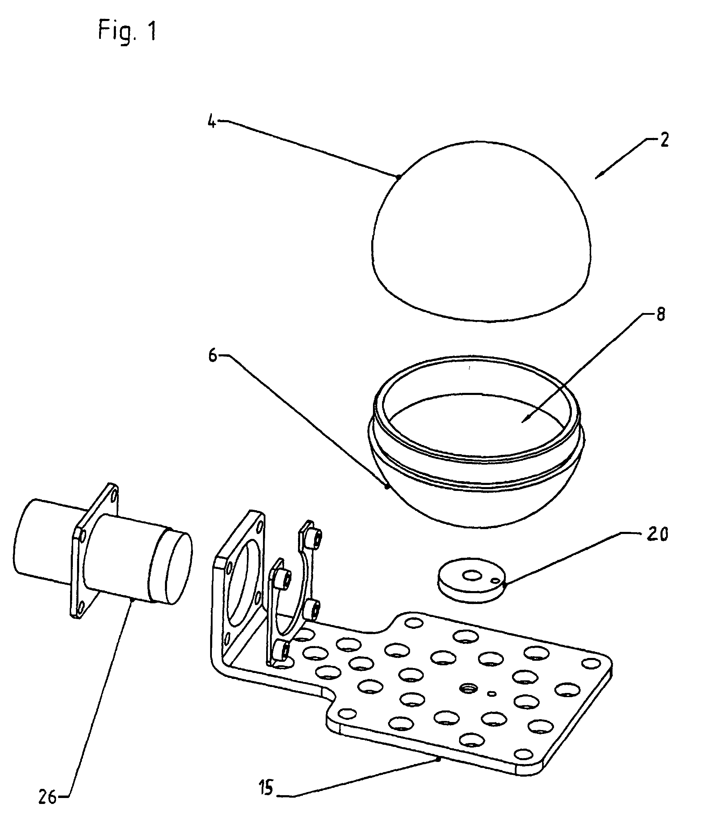

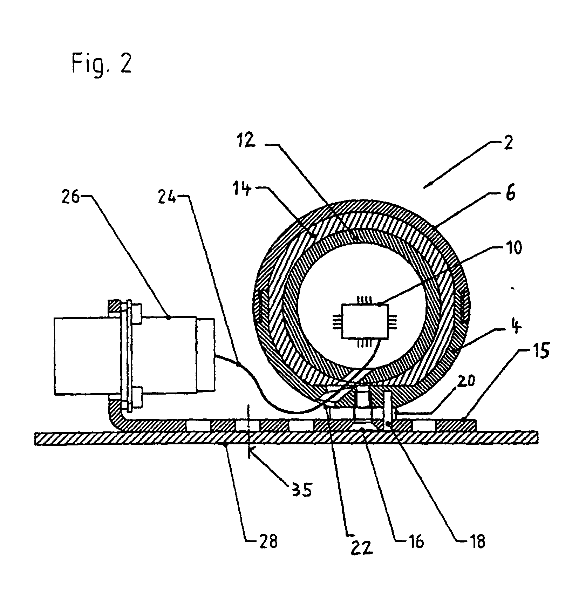

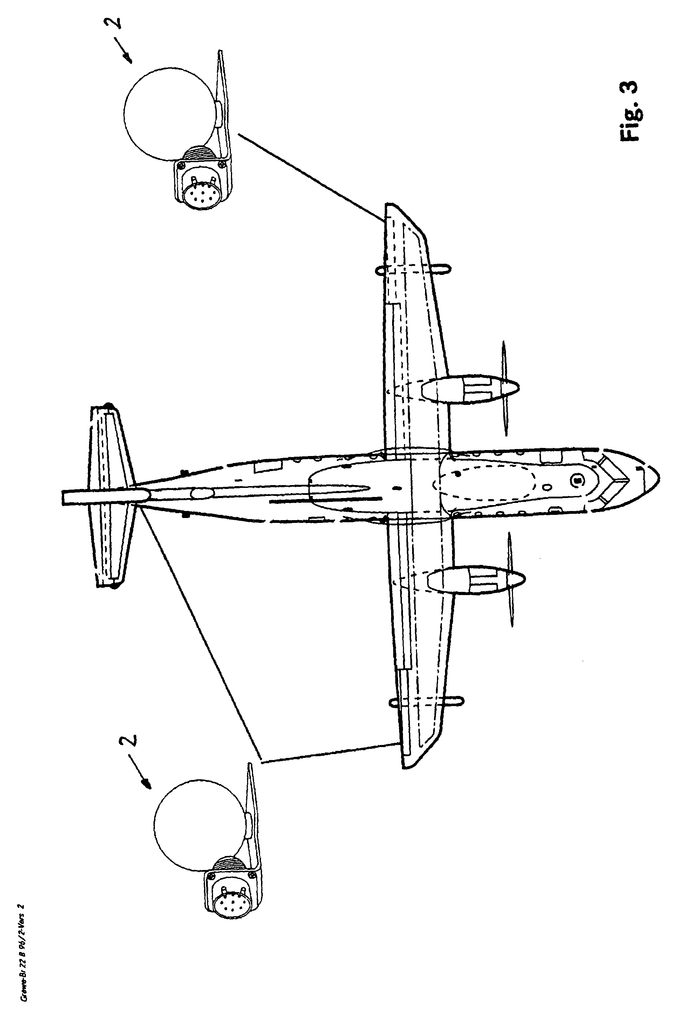

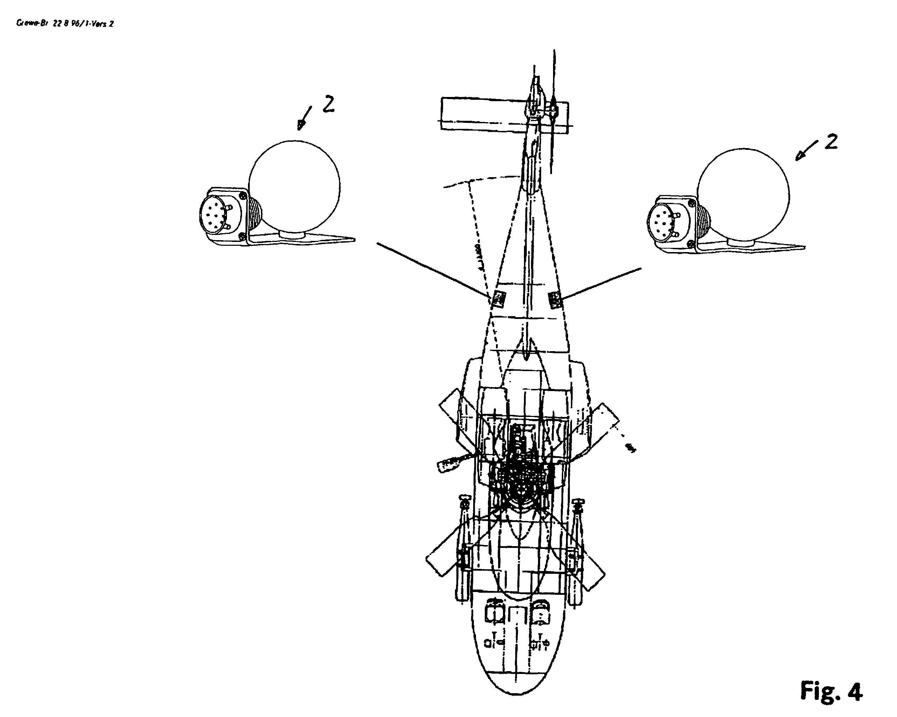

Fig 1 zeigt in explosiver Darstellung die Kugel **2**, die aus zwei Halbkugelschalen **4, 6** besteht. Die Kugelschalen bestehen aus metallischem Werkstoff, zum Beispiel Stahl. Die Kugel hat in etwa die Grösse eines Tennisballs und ist an ihrer äusseren Oberfläche mit einer Signalfarbe (z.B. leuchtendes Rot) versehen. In den Hohlraum **8** der Halbkugelschalen **4, 6** wird eine in Fig. 2 gezeigte Speicherelektronik **10,** die sich innerhalb eine kugelförmigen Vergussmasse **12** befindet, eingebracht und dann werden die Halbkugelschalen **4, 6** entweder mittels einer Presspassung (Fig. 1) oder eines Gewindes (nicht gezeigt) miteinander fest verbunden. Die Innenseite der Halbkugeln ist mit einer Thermoisolation **14** versehen. Die eine Halbkugel **6** ist an einer Seite abgeflacht und in diesem Bereich mit einer Platte **15** mittels Schraube **16,** Zentrierstift **18** und Distanzstück **20** befestigt. In diesem Bereich der Halbkugel **6** ist auch eine Bohrung **22** für die Datenleitung **24** vorgesehen. Die Datenleitung **24** führt zu einem mit der Platte **15** verbundenen Modulstecker **26,** der seinerseits mit Datenleitungen (nicht gezeigt) verbunden ist, die von den Datenquellen kommen. Die Platte **15** ist mit einem Bauteil **28** eines Flugzeugs (Fig. 3) oder eines Hubschraubers (Fig. 4) verbunden. Diese Fig. zeigen mögliche Einbauorte für den erfindungsgemässen crash recorder **2** im Heck und in den Flügeln eines Flugzeugs (Fig. 3) oder im Heck eines Hubschraubers (Fig. 4). Der Crash Recorder in der Grösse eines Tennisballs kann auch in eine nicht gezeigte Rettungsinsel eingebaut werden.

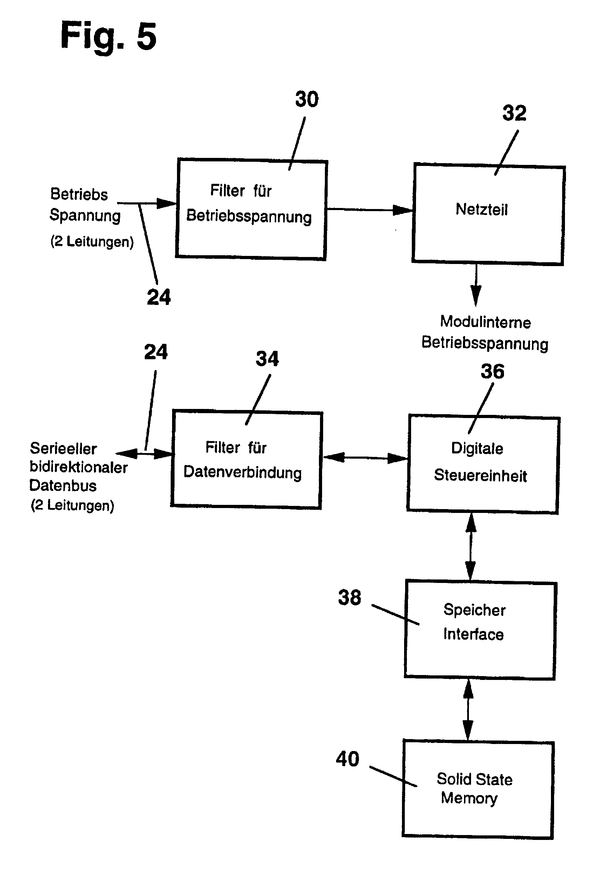

Fig. 5 zeigt beispielhaft einige Einzelheiten der Speicherelektronik **10.** Die Speicherelektronik **10** ist mit Verbindungsleitungen **24** am Modulstecker **26** angeschlossen. Die Stromversorgung der Speicherelektronik eines Speichermoduls besteht aus einem Filter für die Betriebsspannung **30** und einem Netzteil **32** zur Erzeugung einer geregelten Gleichspannung. Die Datenverarbeitungseinheit der Speicherelektronik eines Speichermoduls besteht aus einem Filter **34** und einen seriellen Datenbus einer digitalen Steuereinheit **36,** einem Speicher Interface **38** und einem Datenspeicher **40.** Das Filter für die Datenverbindung **34** sorgt für eine Hochfrequenz-Störunterdrückung und eine elektromagnetische Verträglichkeit gegen Fremdeinstrahlungen (z.B. Senderantennen am Luftfahrzeug). Die digitale Steuereinheit **36** empfängt und sendet die vereinbarten Datenprotokolle von und zu der Bordelektronik und gibt Speicherdaten und Speicherbefehle und das Speicher Interface **38** weiter. Das Speicher Interface **38** beschreibt und liest den Daten im Speicher **40** des Speichermoduls. Der Datenspeicher **40** besteht aus mehreren, bei Spannungsausfall nichtflüchtigen, löschbaren und wiederprogrammierbaren Speicherbausteinen.

Wie in den Fig. 3 und 4 gezeigt, sind in einem Fluggerät in der Regel mehrere crash-recorder-Kugeln **2** eingebaut. Die Geräte sind mit den Datenquellen entweder mittels sternförmiger oder ringförmiger Signalleitungen verbunden. Im Bedarfsfall können die Geräte auch in Rettungsinseln eingebaut werden.

## Patentansprüche

1. Einrichtung zur Aufzeichnung von Flugdaten mit einem Datenspeicher, der sich innerhalb eines schützenden, metallischen Gehäuses (**2**) mit Thermoisolation an der Innenfläche befindet und Verbindungsleitungen zwischen dem Datenspeicher und Datenquellen, wobei sich in der Wand des schützenden Gehäuses (**2**) eine Bohrung (**22**) für die Datenleitungen (**24**) befindet und dass der Datenspeicher (**10**) eine in einem Vergussblock (**12**) eingebettete Festkörper-Speicherelektronik (solid state memory recorder) ist, die den innerhalb des schützenden Gehäuses (**2**) vorhandenen Hohlraum (**8**) ausfüllt, **dadurch gekennzeichnet, dass** das schützende Gehäuse eine Hohlkugel (**2**) mit einem äusseren Durchmesser von 5 - 8 cm ist, die aus zwei miteinander fest verbundenen Halbkugelschalen (**4, 6**) besteht.

2. Einrichtung nach Anspruch 1, **dadurch gekennzeichnet, dass** die Halbkugelschalen (**4, 6**) mittels einer Presspassung miteinander verbunden sind.

3. Einrichtung nach Anspruch 1, **dadurch gekennzeichnet, dass** die Halbkugelschalen (**4, 6**) mittels eines Gewindes miteinander verbunden sind.

4. Einrichtung nach Ansprüchen 1 bis 3, **dadurch gekennzeichnet, dass** eine Halbkugel (**6**) im Bereich der Bohrung (**22**) für die Datenleitung (**24**) abgeflacht ist und mindestens eine weitere Bohrung für Befestigungsmittel (**16**) zur Verbindung mit einem Bauteil (**28**) des Fluggeräts aufweist.

5. Kugelförmige Einrichtung zur Aufzeichnung von Flugdaten nach Ansprüchen 1 bis 4, **dadurch gekennzeichnet, dass** mehrere Kugeln (**2**) getrennt voneinander im Fluggerät untergebracht sind und mittels sternförmig und/oder ringförmiger Signalleitungen miteinander verbunden sind.

6. Kugelförmige Einrichtung zur Aufzeichnung von Flugdaten nach einem oder mehreren der Ansprüche 1 bis 5, **dadurch gekennzeichnet, dass** zumindest eine der Kugeln (**2**) wasserdicht in eine Rettungsinsel des Fluggerätes eingebaut ist.

## Claims

1. Device for recording flight data, with a data memory which is located within a protective metallic housing (2) with thermal insulation on the inner surface and connecting lines between the data memory and data sources, with a hole (22) for the data lines (24) being located in the wall of the protective housing (2), and in that the data memory (10) is solid state memory electronics (a solid state memory recorder) which is embedded in an encapsulation block (12) and fills the cavity (8) within the protective housing (2), **characterized in that** the protective housing is a hollow sphere (2) with an external diameter of 5 - 8 cm, which comprises two hemispherical shells (4, 6) which are firmly connected to one another.

2. Device according to Claim 1, **characterized in that** the hemispherical shells (4, 6) are connected to one another by means of a press fit.

3. Device according to Claim 1, **characterized in that** the hemispherical shells (4, 6) are connected to one another by means of a thread.

4. Device according to Claims 1 to 3, **characterized in that** one hemisphere (6) is flattened in the region of the hole (22) for the data line (24) and has at least one further hole for attachment means (16) for connection to a component (28) of the aircraft.

5. Spherical device for recording flight data according to Claims 1 to 4, **characterized in that** a number of spheres (2) are accommodated separately from one another in the aircraft, and are connected to one another by means of signal lines in the form of a star and/or ring.

6. Spherical device for recording flight data according to one or more of Claims 1 to 5, **characterized in that** at least one of the spheres (2) is installed in a watertight manner in a rescue capsule in the aircraft.

## Revendications

1. Dispositif d'enregistrement des données de vol comprenant une mémoire de données qui se trouve à l'intérieur d'un boîtier métallique protecteur (2) avec une isolation thermique sur la surface intérieure et des câbles de liaison entre la mémoire de données et les sources de données, un orifice (22) pour les câbles de données (24) se trouvant dans la paroi du boîtier protecteur (2) et la mémoire de données (10) étant un circuit électronique de mémorisation à semiconducteur (solid state memory recorder) intégré dans un bloc de scellement (12) qui remplit l'espace creux (8) présent à l'intérieur du boîtier protecteur (2), **caractérisé en ce que** le boîtier protecteur est une sphère creuse (2) ayant un diamètre extérieur compris entre 5 et 8 cm qui se compose de deux coques demi-sphériques (4, 6) attachées à demeure l'une à l'autre.

2. Dispositif selon la revendication 1, **caractérisé en ce que** les coques demi-sphériques (4, 6) sont attachées l'une à l'autre par ajustement à compression.

3. Dispositif selon la revendication 1, **caractérisé en ce que** les coques demi-sphériques (4, 6) sont attachées l'une à l'autre par un filetage.

4. Dispositif selon l'une des revendications 1 à 3, **caractérisé en ce qu'**une demi-sphère (6) est aplatie dans la zone de l'orifice (22) du câble de données (24) et présente au moins un orifice supplémentaire pour un moyen de fixation (16) destiné à l'attache avec un élément de construction (28) de l'aéronef.

5. Dispositif sphérique pour l'enregistrement de données de vol selon l'une des revendications 1 à 4, **caractérisé en ce que** plusieurs sphères (2) sont installées séparément les unes des autres dans l'aéronef et sont reliées entre elles à l'aide de câbles de signal en étoile et/ou en anneau.

6. Dispositif sphérique pour l'enregistrement de données de vol selon l'une des revendications 1 à 5, **caractérisé en ce qu'**au moins une sphère (2) est installée de manière étanche dans un canot de sauvetage de l'aéronef.
